# EUROPÄISCHE PATENTANMELDUNG

(11) **EP 3 225 881 A1**
(43) Veröffentlichungstag der Anmeldung: **04.10.2017**
(21) Anmeldenummer: 17163621.0
(22) Anmeldetag: 29.03.2017
(51) Int. Cl.: F16H 49/00

(54) **SPANNUNGSWELLENGETRIEBE**

(30) Priorität: 30.03.2016 LU 93010
(71) Anmelder: Ovalo GmbH, 65555 Limburg (DE)
(72) Erfinder:
(74) Vertreter: Grabovac, Dalibor

(57) **Zusammenfassung**

Die Erfindung betrifft ein Spannungswellengetriebe, das einen Wellengenerator aufweist, der in einer radialflexiblen, außenverzahnten Hülse rotierbar gelagert ist, und das ein erstes starres, innenverzahntes Hohlrad aufweist, dessen Verzahnung mit der Außenverzahnung der radialflexiblen, außenverzahnten Hülse in Zahneingriff steht und ein zweites starres, innenverzahntes Hohlrad aufweist, dessen Verzahnung ebenfalls mit der Außenverzahnung der radialflexiblen, außenverzahnten Hülse in Zahneingriff steht. Das Spannungswellengetriebe zeichnet sich dadurch aus, dass der Wellengenerator mittels eines einzigen radialflexiblen Wälzlagers relativ zu der radialflexiblen, außenverzahnten Hülse rotierbar gelagert ist, das eine erste Wälzkörperreihe mit ersten Wälzkörpern und wenigstens eine axial zu der ersten Wälzkörperreihe versetzte, zweite Wälzkörperreihe mit zweiten Wälzkörpern aufweist, wobei
a. das Wälzlager einen Außenring aufweist, mit dem die ersten Wälzkörper der ersten Wälzkörperreihe und die zweiten Wälzkörper der zweiten Wälzkörperreihe unmittelbar in Kontakt stehen, und/oder wobei
b. das Wälzlager einen Innenring aufweist, mit dem die ersten Wälzkörper der ersten Wälzkörperreihe und die zweiten Wälzkörper der zweiten Wälzkörperreihe unmittelbar in Kontakt stehen.

## Beschreibung

Die Erfindung betrifft ein Spannungswellengetriebe, das einen Wellengenerator aufweist, der in einer radialflexiblen, außenverzahnten Hülse rotierbar gelagert ist, und das ein erstes starres, innenverzahntes Hohlrad aufweist, dessen Verzahnung mit der Außenverzahnung der radialflexiblen, außenverzahnten Hülse in Zahneingriff steht und ein zweites starres, innenverzahntes Hohlrad aufweist, dessen Verzahnung ebenfalls mit der Außenverzahnung der radialflexiblen, außenverzahnten Hülse in Zahneingriff steht.

Ein Spannungswellengetriebe dieser Art ist beispielsweise aus EP 2 184 514 B1 bekannt. Konkret offenbart diese Patentschrift ein Spannungswellengetriebe mit einem Wellengenerator zum Erzeugen einer Drehbewegung und einem Flexspline an dessen Innenumfang oder Außenumfang wenigstens ein Bauteil angreift, welches die Drehbewegung des Wellengenerators auf den Flexspline überträgt, wobei der Flexspline mit seinem Außenumfang oder Innenumfang an einem Circular Spline und einem Dynamic Spline angreift. Der Circular Spline und der Dynamic Spline sind jeweils als Hohlring ausgebildet, an dessen Innenumfang jeweils der Flexspline mit denjenigen Abschnitten angreift, welche durch den Wellengenerator jeweils radial nach außen verformt sind. Durch die Wellbewegung des Wellengenerators wird somit eine Drehbewegung des Flexsplines und gleichzeitig eine Drehbewegung des starren Übertragungselementes bewirkt.

Es ist daher die Aufgabe der vorliegenden Erfindung, ein Spannungswellengetriebe anzugeben, das bei konstruktiv einfachem Aufbau zuverlässiger funktioniert.

Die Aufgabe wird durch ein Spannungswellengetriebe gelöst, das dadurch gekennzeichnet ist, dass der Wellengenerator mittels eines einzigen radialflexiblen Wälzlagers relativ zu der radialflexiblen, außenverzahnten Hülse rotierbar gelagert ist, das eine erste Wälzkörperreihe mit ersten Wälzkörpern und wenigstens eine axial zu der ersten Wälzkörperreihe versetzte, zweite Wälzkörperreihe mit zweiten Wälzkörpern aufweist, wobei
a. das Wälzlager einen Außenring aufweist, mit dem die ersten Wälzkörper der ersten Wälzkörperreihe und die zweiten Wälzkörper der zweiten Wälzkörperreihe unmittelbar in Kontakt stehen, und/oder wobei
b. das Wälzlager einen Innenring aufweist, mit dem die ersten Wälzkörper der ersten Wälzkörperreihe und die zweiten Wälzkörper der zweiten Wälzkörperreihe unmittelbar in Kontakt stehen.

In erfindungsgemäßer Weise wurde erkannt, dass es bei einem Spannungswellengetriebe der eingangs genannten Art zu Zahneingriffsstörungen oder gar zu einem sogenannten Überratschen der Verzahnungen eines der beiden Hohlräder relativ zur Verzahnung der radialflexiblen Hülse kommen kann, bei denen ein axiales Ende der radialflexiblen Hülse insbesondere bei einer großen Momentanbelastung radial nach innen ausweicht. Insbesondere kann es bei einem sogenannten Ringgetriebe, bei dem die radialflexible Hülse als zylinderförmiger Ring ausgebildet ist, dazu kommen, dass beide axialen Enden der radialflexiblen Hülse radial nach innen ausweichen, so dass es in diesen Bereichen zu Zahneingriffsstörungen und/oder einer erhöhten Geräuschentwicklung und/oder gar zu einem Überratschen kommen kann.

Dieser nachteilige Effekt kann bei einem erfindungsgemäßen Spannungswellengetriebe vorteilhaft dadurch vermieden werden, dass sich das erste Hohlrad, vorzugsweise im Wesentlichen und hauptsächlich, über die radialflexible, außenverzahnte Hülse und die ersten Wälzkörper der ersten Wälzkörperreihe des Wälzlagers an dem Wellengenerator abstützt und/oder dadurch, dass sich der axiale Teilbereich der radialflexiblen Hülse, der mit dem ersten Hohlrad in Zahneingriff steht, vorzugsweise im Wesentlichen und hauptsächlich, über die ersten Wälzkörper der ersten Wälzkörperreihe des Wälzlagers an dem Wellengenerator abstützt. Analog kann alternativ oder zusätzlich vorteilhaft vorgesehen sein, dass sich das zweite Hohlrad, insbesondere im Wesentlichen und hauptsächlich, über die radialflexible, außenverzahnte Hülse und die zweiten Wälzkörper der zweiten Wälzkörperreihe des Wälzlagers an dem Wellengenerator abstützt und/oder dass sich der axiale Teilbereich der radialflexiblen Hülse, der mit dem zweiten Hohlrad in Zahneingriff steht, vorzugsweise im Wesentlichen und hauptsächlich, über die zweiten Wälzkörper der zweiten Wälzkörperreihe des Wälzlagers an dem Wellengenerator abstützt. Die vorgenannten Ausführungen haben den ganz besonderen technischen Effekt, dass die radialflexible Hülse über ihre gesamte Breite oder wenigstens über die Breite ihrer Verzahnung sicher und zuverlässig derart abgestützt ist, dass es zu keinem radialen Ausweichen kommen kann. Insoweit sind Zahneingriffsstörungen, insbesondere eine störende Geräuschentwicklung aufgrund von Zahneingriffsstörungen, wirkungsvoll vermieden.

Im Gegensatz zur Verwendung von zwei einzelnen, separaten Wälzlagern, die parallel zueinander angeordnet werden, hat die erfindungsgemäß vorgeschlagene Verwendung eines einzigen Wälzlagers mit zwei Wälzkörperreihen den ganz besonderen Vorteil, dass eine Relativbewegung von einzelnen, separaten Wälzlagern, insbesondere eine Relativbewegung der Außenringe separater Wälzlager, wie sie bei hohen Belastungen auftreten kann, ausgeschlossen ist. Vielmehr ist bei der vorliegenden Erfindung vorteilhaft gewährleistet, dass die radialflexible Hülse im Bereich beider Hohlräder, insbesondere durch den beiden Wälzkörperreihen gemeinsamen Außenring und/oder den beiden Wälzkörperreihen gemeinsamen Innenring, besonders gut abgestützt ist, weil sich die einzelnen Wälzkörperreihen über das wenigstens eine Bauteil gekoppelt sind und sich daher axial relativ zueinander gar nicht oder allenfalls nur unwesentlich bewegen können.

Insbesondere kann vorteilhaft vorgesehen sein, dass der Außenring für die Wälzkörper jeder Wälzkörperreihe jeweils eine eigene Außenführungsnut aufweist.

Insbesondere kann vorteilhaft vorgesehen sein, dass der Innenring für die Wälzkörper jeder Wälzkörperreihe jeweils eine eigene Innenführungsnut aufweist.

Alternativ oder zusätzlich kann auch ein gemeinsamer Wälzkörperkäfig, insbesondere Kugelkäfig vorhanden sein, mit dem die ersten Wälzkörper der ersten Wälzkörperreihe und die zweiten Wälzkörper der zweiten Wälzkörperreihe unmittelbar in Kontakt stehen.

Erfindungsgemäß ist der Wellengenerator mittels eines einzigen radialflexiblen Wälzlagers relativ zu der radialflexiblen, außenverzahnten Hülse rotierbar gelagert, das eine erste Wälzkörperreihe mit ersten Wälzkörpern und wenigstens eine zweite, axial zu der ersten Wälzkörperreihe versetzte, zweite Wälzkörperreihe mit zweiten Wälzkörpern aufweist.

Bei einer ganz besonders vorteilhaften Ausführung, die ein besonders sicheres Abstützen der radialflexiblen Hülse gewährleistet, sind die ersten Wälzkörper der ersten Wälzkörperreihe des Wälzlagers in einer zur Axialrichtung des Spannungswellengetriebes senkrechten ersten Querschnittsebene angeordnet, in der auch das erste Hohlrad angeordnet ist. Alternativ oder zusätzlich kann vorteilhaft vorgesehen sein, dass die zweiten Wälzkörper der zweiten Wälzkörperreihe des Wälzlagers in einer zur Axialrichtung des Spannungswellengetriebes senkrechten zweiten Querschnittsebene angeordnet sind, in der auch das zweite Hohlrad angeordnet ist. Auf diese Weise wird vorteilhaft gewährleistet, dass das erste Hohlrad und der axial zugehörige Teil der Hülse vornehmlich über die Wälzkörper der ersten Wälzkörperreihe abgestützt wird, während das zweite Hohlrad und der zugehörige Teil der radialflexiblen Hülse, mit dem das zweite Hohlrad in Zahneingriff steht, vornehmlich über die zweiten Wälzkörper der zweiten Wälzkörperreihe abgestützt ist.

Vorzugsweise sind das erste Hohlrad und das zweite Hohlrad parallel zueinander und/oder koaxial zueinander angeordnet. Zwischen den Hohlrädern kann ein Lager, insbesondere ein Gleitlager, vorhanden sein, das gewährleistet, dass die Hohlräder ungestört relativ zueinander rotieren können.

Insbesondere kann vorteilhaft vorgesehen sein, dass die Verzahnung des ersten Hohlrades eine erste Zähnezahl aufweist, die größer ist, als die Zähnezahl der Verzahnung des zweiten Hohlrades. Insbesondere kann hierbei vorgesehen sein, dass eines der beiden Hohlräder dieselbe Zähnezahl aufweist, wie die außenverzahnte Hülse. Es ist jedoch auch möglich, dass beide Hohlräder eine andere Zähnezahl aufweisen, als die Verzahnung der radialflexiblen Hülse.

Bei einer besonders vorteilhaften Ausführung ist die Anzahl der ersten Wälzkörper der ersten Wälzkörperreihe in Abhängigkeit von der Zähneanzahl des ersten Hohlrades gewählt.

Es hat sich herausgestellt, dass eine Ausführung, bei der die Anzahl der ersten Wälzkörper der ersten Wälzkörperreihe im Bereich von 16 bis 25 liegt besonders vorteilhaft ist. Auch die Anzahl der zweiten Wälzkörper der zweiten Wälzkörperreihe kann vorteilhaft im Bereich von 16 bis 25 liegen.

Analog kann, alternativ oder zusätzlich, auch vorgesehen sein, dass die Anzahl der zweiten Wälzkörper der zweiten Wälzkörperreihe größer ist, als der fünfte Teil der Zähneanzahl des zweiten Hohlrades, insbesondere größer als der dritte Teil der Zähneanzahl des zweiten Hohlrades. Es ist alternativ auch möglich, dass die die Anzahl der ersten Wälzkörper der ersten Wälzkörperreihe genauso groß ist, wie die Anzahl der zweiten Wälzkörper der zweiten Wälzkörperreihe.

Bei einer besonders vorteilhaften Ausführung ist die Anzahl der ersten Wälzkörper der ersten Wälzkörperreihe von der Anzahl der Wälzkörper der zweiten Wälzkörperreihe verschieden. Insbesondere kann vorteilhaft vorgesehen sein, dass die Anzahl der ersten Wälzkörper der ersten Wälzkörperreihe größer ist, als die Anzahl der zweiten Wälzkörper der zweiten Wälzkörperreihe. Bei einer besonderen Ausführung ist die Anzahl der ersten Wälzkörper der ersten Wälzkörperreihe um genau eins größer, als die Anzahl der zweiten Wälzkörper einer zweiten Wälzkörperreihe. Diese Ausführungen mit unterschiedlichen Anzahlen von Wälzkörpern in den einzelnen Wälzkörperreihen haben den ganz besonderen Vorteil, dass die Relativstellung der Wälzkörper der ersten Wälzkörperreihe zu den Wälzkörpern der zweiten Wälzkörperreihe zueinander ständig wechselt. Insbesondere für eine Belastungssituation ungünstige Relativstellungen der Wälzlager der einzelnen Wälzkörperreihen zueinander treten auf diese Weise allenfalls kurzfristig und vorrübergehend auf. Außerdem wird auf diese Weise gleichbleibender Verschleiß erreicht.

Vorzugsweise ist wenigstens ein Wälzkörperkäfig, insbesondere ein Kugelkäfig, vorhanden, der gewährleistet, dass die Wälzkörper der einzelnen Wälzkörperreihen in Tangentialrichtung äquidistant zueinander beabstandet bleiben. Hierbei kann vorteilhaft vorgesehen sein, dass für jede Wälzkörperreihe ein eigener Kugelkäfig (Wälzkörperkäfig) vorhanden ist. Diese Wälzkörperkäfige können insbesondere als Schnappkäfige ausgebildet sein. Insbesondere kann ein solcher Schnappkäfig axial von außen aufgesteckt werden. Es ist alternativ auch möglich, dass ein gemeinsamer Wälzkörperkäfig, insbesondere Kugelkäfig, für die Wälzkörper beider Wälzkörperreihen vorhanden ist.

Die Wälzkörper können insbesondere als Kugeln ausgebildet sein. Es ist allerdings beispielsweise auch möglich, dass die Wälzkörper als Nadeln ausgebildet sind.

Bei einer ganz besonders vorteilhaften Ausführung ist die Anzahl der Wälzkörper der ersten Wälzkörperreihe gerade. Es ist auch möglich, dass die Anzahl der zweiten Wälzkörper der zweiten Wälzkörperreihe gerade ist.

Bei einer besonderen Ausführung ist die Anzahl der ersten Wälzkörper der ersten Wälzkörperreihe gerade, während die Anzahl der zweiten Wälzkörper der zweiten Wälzkörperreihe ungerade ist. Insbesondere bei einer solchen Ausführung ist vorteilhaft gewährleistet, dass sich die Relativstellung der einzelnen Wälzkörper der einzelnen Wälzkörperreihen fortlaufend ändert. Insoweit kann alternativ auch vorgesehen sein, dass die Anzahl der ersten Wälzkörper der ersten Wälzkörperreihe ungerade ist, während die Anzahl der zweiten Wälzkörper der zweiten Wälzkörperreihe gerade ist.

Bei einer ganz besonders stabilen Ausführung weist das Wälzlager wenigstens eine dritte Wälzkörperreihe mit dritten Wälzkörpern auf. Eine solche Ausführung kann sich beispielsweise anbieten, wenn eines der Hohlräder breiter ausgebildet ist, als das andere Hohlrad. Das breitere Hohlrad und der zugehörige axiale Anteil der radialflexiblen Hülse, der mit dem breiteren Hohlrad in Wirkverbindung steht, kann hierbei vorzugsweise über die Wälzkörper von zwei Wälzkörperreihen abgestützt werden, während das schmalere Hohlrad und der axial zugehörige Anteil der radialflexiblen Hülse, der mit dem anderen Hohlrad in Zahneingriff steht, über die Wälzkörper der dritten Wälzkörperreihe abgestützt wird.

Bei einer besonderen Ausführung ist vorgesehen, dass sowohl das erste Hohlrad mit seinem axial zugehörigen Anteil der radialflexiblen Hülse, als auch das zweite Hohlrad mit seinem axial zugehörigen Anteil der radialflexiblen Hülse, jeweils über die Wälzkörper zweier Wälzkörperreihen abgestützt werden, so dass das Wälzlager insgesamt vier Wälzkörperreihen aufweist. Insbesondere auch hierbei kann vorteilhaft vorgesehen sein, dass die einzelnen Wälzkörperreihen zueinander unterschiedliche Anzahlen von Wälzkörpern aufweisen.

Bei einer besonders vorteilhaften Ausführung sind die ersten Wälzkörper in Tangentialrichtung versetzt zu den zweiten Wälzkörpern angeordnet. Auf diese Weise wird eine besonders gute Abstützung der radialflexiblen Hülse erreicht. Insbesondere kann vorteilhaft vorgesehen sein, dass die Wälzkörper benachbarter Wälzkörperreihen in Tangentialrichtung um einen Abstand Z=D/A versetzt sind, wobei D der tangentiale Durchmesser eines Wälzkörpers und A die Gesamtanzahl an Wälzkörperspuren ist. Auf diese Weise ist eine besonders gleichmäßige Verteilung der Wälzkörper erreicht.

Bei einer vorteilhaften Ausführung weist das Wälzlager einen Außenring mit jeweils einer Führungsnut für die Wälzkörper jeder Wälzkörperreihe auf. Darüber hinaus weist das Wälzlager bei dieser Ausführung zusätzlich einen Innenring mit jeweils einer Führungsnut für die Wälzkörper jeder Wälzkörperreihe auf.

Der Außenring ist ein von der radialflexiblen Hülse separates und/oder separat hergestelltes Bauteil. Insbesondere ist der Außenring nicht gemeinsam einstückig mit der radialflexiblen Hülse hergestellt oder Bestandteil der radialflexiblen Hülse. Der Innenring ist ein von dem Wellengenerator separates und/oder separat hergestelltes Bauteil. Insbesondere ist der Innenring nicht gemeinsam einstückig mit dem Wellengenerator hergestellt oder Bestandteil des Wellengenerators.

Besonders kompakt und robust ist eine Ausführung, bei der das Wälzlager den Außenring, insbesondere mit jeweils einer Außenführungsnut für die Wälzkörper jeder Wälzkörperreihe, aufweist und bei der das Wälzlager keinen Innenring aufweist, sondern eine Außenumfangsfläche des Wellengenerators jeweils eine Innenführungsnut für die Wälzkörper jeder Wälzkörperreihe aufweist. Alternativ kann auch vorgesehen sein, dass das Wälzlager einen Innenring mit jeweils einer Innenführungsnut für die Wälzkörper jeder Wälzkörperreihe aufweist, während kein Außenring vorhanden ist, sondern eine Innenumfangsfläche der radialflexiblen Hülse jeweils eine Innenführungsnut für die Wälzkörper jeder Wälzkörperreihe aufweist.

Ein besonders sicheres Abstützen der Hohlräder und der radialflexiblen Hülse ist bei einer Ausführung erreicht, bei der die axiale Breite des Wälzlagers größer ist, als die Summe der axialen Breiten des ersten und des zweiten Hohlrades. Alternativ oder zusätzlich kann vorteilhaft vorgesehen sein, dass die axiale Breite des Wälzlagers größer ist, als die Summe der axialen Breiten der Verzahnungen des ersten und des zweiten Hohlrades oder dass die axiale Breite des Wälzlagers größer ist, als die Summe der axialen Breiten der mit der Verzahnung der radialflexiblen Hülse in Zahneingriff stehenden Anteile der Verzahnungen des ersten und des zweiten Hohlrades.

Besonders vorteilhaft ist ein Aktuator, der ein erfindungsgemäßes Spannungswellengetriebe aufweist. Insbesondere kann einem Antriebsmotor des Aktuators das erfindungsgemäße Spannungswellengetriebe triebtechnisch nachgeschaltet sein.

Besonders sicher und zuverlässig ist ein Lenkungsaktuator, der mit einem erfindungsgemäßen Spannungswellengetriebe ausgerüstet ist. Der Lenkungsaktuator kann insbesondere dazu dienen, in einem Kraftfahrzeug den Lenkbewegungen, die der Fahrer ausübt, zusätzliche Lenkbewegungen zu überlagern.

Besonders zuverlässig ist ein Verbrennungsmotor, der mit einem Aktuator ausgerüstet ist, der ein erfindungsgemäßes Spannungswellengetriebe beinhaltet. Der Aktuator kann beispielsweise als Nockenwellenversteller oder als Aktuator zum Verstellen eines Expansionshubes oder der Größe eines Hubraumes dienen. Besonders vorteilhaft ist ein Aktuator zum Antreiben einer Verstellwelle zum Verstellen des Expansionshubes und/oder des Verdichtungsverhältnisses eines Verbrennungsmotors, wobei der Aktuator einen Antriebsmotor und ein dem Antriebsmotor nachgeschaltetes, erfindungsgemäßes Spannungswellengetriebe aufweist. Insbesondere hierbei kann vorteilhaft vorgesehen sein, dass getriebeabtriebsseitig eine einerseits radialflexible und/oder quer zur Axialrichtung biegbare und andererseits torsionssteife Kupplung an das Getriebe angeschlossen ist.

Besonders vorteilhaft ist der Einsatz eines erfindungsgemäßen Spannungswellengetriebes in einem Fahrwerksaktuator. Der Fahrwerksaktuator kann insbesondere Teil eines aktiven Fahrwerks sein und dazu dienen Wank- und/oder Nickbewegungen eines Fahrzeuges zu verhindern oder zu minimieren.

Insbesondere ist es ganz allgemein von Vorteil, in einem Fahrzeug, insbesondere einem Kraftfahrzeug, ein erfindungsgemäßes Spannungswellengetriebe einzusetzen. Insoweit kann das erfindungsgemäße Spannungswellengetriebe vorteilhaft Teil eines Fahrzeugs, insbesondere eines Kraftfahrzeugs, sein.

In der Zeichnung ist der Erfindungsgegenstand beispielhaft und schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: ein Ausführungsbeispiel eines erfindungsgemäßen Spannungswellengetriebes,
- Fig. 2: ein anderes Ausführungsbeispiel eines erfindungsgemäßen Spannungswellengetriebes und
- Fig. 3: ein drittes Ausführungsbeispiel eines erfindungsgemäßen Spannungswellengetriebes.

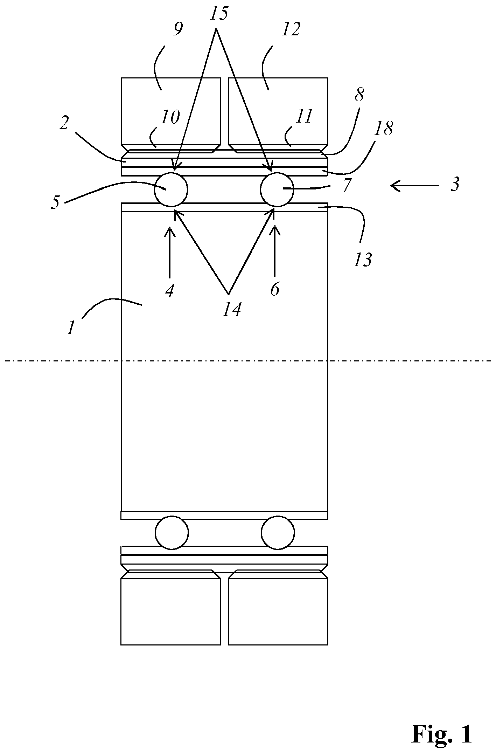

Figur 1 zeigt ein Ausführungsbeispiel eines erfindungsgemäßen Spannungswellengetriebes, das einen Wellengenerator 1 aufweist, der in einer radialflexiblen außenverzahnten Hülse 2 rotierbar gelagert ist. Konkret ist der Wellengenerator 1 mittels eines radialflexiblen Wälzlagers 3 relativ zu der radialflexiblen außenverzahnten Hülse 2 rotierbar gelagert, wobei das Wälzlager eine erste Wälzkörperreihe 4 mit ersten Wälzkörpern 5 und eine zweite, axial von der ersten Wälzkörperreihe 4 beabstandete zweite Wälzkörperreihe 6 mit zweiten Wälzkörpern 7 aufweist. Die Außenverzahnung 8 der radialflexiblen Hülse 2 steht mit einem ersten, starren innenverzahnten Hohlrad 9 an zwei gegenüberliegenden und im Betrieb umlaufenden Zahneingriffsstellen, die in der Ebene der großen Hochachse des elliptisch ausgebildeten Wellengenerators 1 liegen, in Zahneingriff. Darüber hinaus steht die Außenverzahnung 8 mit der Innenverzahnung 11 eines zweiten Hohlrades 12 ebenfalls an zwei gegenüberliegenden und im Betrieb umlaufenden Stellen in Zahneingriff.

Das radialflexible Wälzlager 3 weist als das Bauteil, mit dem die ersten Wälzkörper 5 der ersten Wälzkörperreihe 4 und die zweiten Wälzkörper 7 der zweiten Wälzkörperreihe 6 unmittelbar in Kontakt stehen, einen Innenring 13 und als weiteres Bauteil, mit dem die ersten Wälzkörper 5 der ersten Wälzkörperreihe 4 und die zweiten Wälzkörper 7 der zweiten Wälzkörperreihe 6 unmittelbar in Kontakt stehen, einen Außenring 18 auf. Der Innenring 13 hat zwei umlaufende Führungsnuten 14 für die Wälzkörper 5, 7 der beiden Wälzkörperreihen 4, 6. Der Außenring 18 weist analog ebenfalls zwei umlaufende Nuten 15 für die Wälzkörper 5, 7 der beiden Wälzkörperreihen 4, 6 auf.

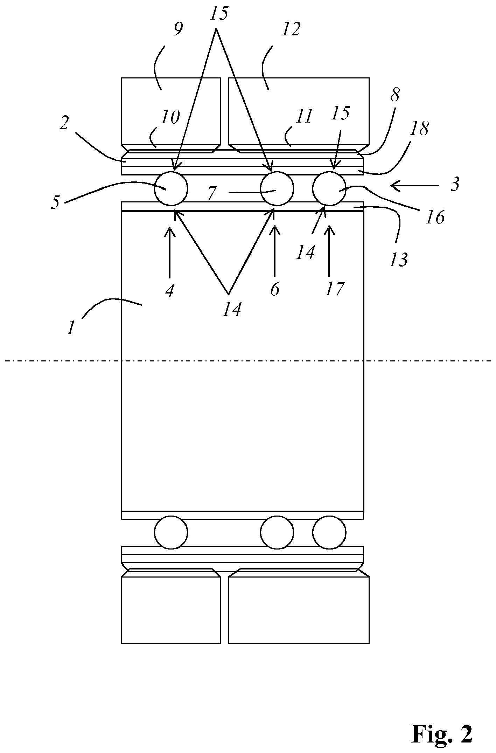

Figur 2 zeigt ein anderes Ausführungsbeispiel eines erfindungsgemäßen Spannungswellengetriebes, bei dem das erste Hohlrad 9 axial schmaler ausgebildet ist, als das zweite Hohlrad 12. Bei dieser Ausführung ist das zweite Hohlrad 12 über die Wälzkörper 7 einer zweiten Wälzkörperreihe 6 und zusätzlich über die dritten Wälzkörper 16 einer dritten Wälzkörperreihe 17 des Wälzlagers 3 abgestützt. Bei dieser Ausführung weist das radialflexible Wälzlager 3 als Bauteil , mit dem die ersten Wälzkörper 5 der ersten Wälzkörperreihe 4 und die zweiten Wälzkörper 7 der zweiten Wälzkörperreihe 6 und die dritten Wälzkörper 16 der dritten Wälzkörperreihe 17 unmittelbar in Kontakt stehen, einen Innenring mit drei umlaufenden Führungsnuten 14 für die Wälzkörper 5, 7, 16 der einzelnen Wälzkörperreihen 4, 6, 17 auf. Analog weist der Außenring 18, der als weiteres Bauteil, mit dem die ersten Wälzkörper 5 der ersten Wälzkörperreihe 4 und die zweiten Wälzkörper 7 der zweiten Wälzkörperreihe 6 und die dritten Wälzkörper 16 der dritten Wälzkörperreihe 17 unmittelbar in Kontakt stehen, fungiert, ebenfalls drei umlaufende Führungsnuten 15 für die Wälzkörper 5, 7, 16 auf.

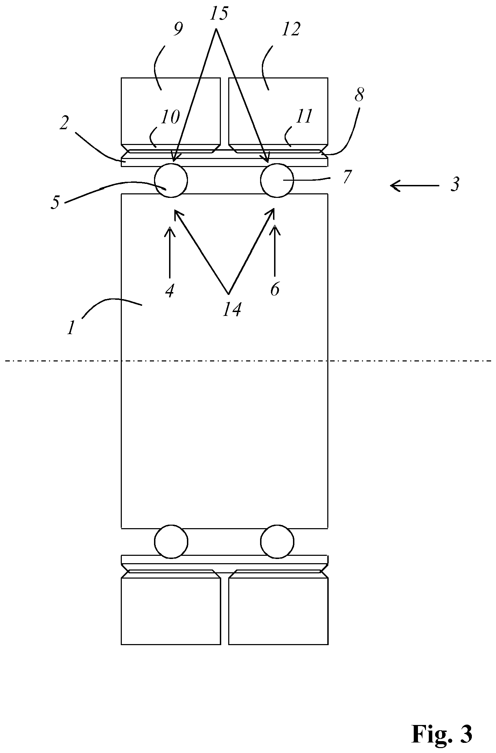

Figur 3 zeigt ein drittes Ausführungsbeispiel, bei dem das Wälzlager 3 durch die Wälzkörper 5, 7 der mehreren Wälzkörperreihen 4, 6 und durch die radialflexible Hülse 2, die auf ihrer Innenumfangsfläche jeweils eine Führungsnut 15 für die Wälzkörper jeder Wälzkörperreihe 4, 6 aufweist, sowie durch den Wellengenerator 1, der auf seiner Außenumfangsfläche jeweils eine Führungsnut 14 für die Wälzkörper 5, 7 jeder Wälzkörperreihe aufweist, gebildet. Bei dieser Ausführung ist kein Innenring 13 und kein Außenring 18 vorhanden. Als Bauteile, mit denen die ersten Wälzkörper 5 der ersten Wälzkörperreihe 4 und die zweiten Wälzkörper 7 der zweiten Wälzkörperreihe 6 unmittelbar in Kontakt stehen, fungieren bei diesem Ausführungsbeispiel der Wellengenerator 1 und die radialflexible Hülse 2.

### Bezugszeichenliste:

- 1: Wellengenerator
- 2: Hülse
- 3: Wälzlager
- 4: Erste Wölzkörperreihe
- 5: Erste Wälzkörper
- 6: Zweite Wölzkörperreihe
- 7: Zweite Wälzkörper
- 8: Außenverzahnung der Hülse 2
- 9: Erstes Hohlrad
- 10: Innenverzahnung des ersten Hohlrades 9
- 11: Innenverzahnung des zweiten Hohlrades 12
- 12: Zweites Hohlrad
- 13: Innenring
- 14: Führungsnuten
- 15: Führungsnuten
- 16: Dritte Wälzkörper
- 17: Dritte Wälzkörperreihe
- 18: Außenring

## Patentansprüche

1. Spannungswellengetriebe, das einen Wellengenerator aufweist, der in einer radialflexiblen, außenverzahnten Hülse rotierbar gelagert ist, und das ein erstes starres, innenverzahntes Hohlrad aufweist, dessen Verzahnung mit der Außenverzahnung der radialflexiblen, außenverzahnten Hülse in Zahneingriff steht und ein zweites starres, innenverzahntes Hohlrad aufweist, dessen Verzahnung ebenfalls mit der Außenverzahnung der radialflexiblen, außenverzahnten Hülse in Zahneingriff steht, **dadurch gekennzeichnet, dass** der Wellengenerator mittels eines einzigen radialflexiblen Wälzlagers relativ zu der radialflexiblen, außenverzahnten Hülse rotierbar gelagert ist, das eine erste Wälzkörperreihe mit ersten Wälzkörpern und wenigstens eine axial zu der ersten Wälzkörperreihe versetzte, zweite Wälzkörperreihe mit zweiten Wälzkörpern aufweist, wobei
a. das Wälzlager einen Außenring aufweist, mit dem die ersten Wälzkörper der ersten Wälzkörperreihe und die zweiten Wälzkörper der zweiten Wälzkörperreihe unmittelbar in Kontakt stehen, und/oder wobei
b. das Wälzlager einen Innenring aufweist, mit dem die ersten Wälzkörper der ersten Wälzkörperreihe und die zweiten Wälzkörper der zweiten Wälzkörperreihe unmittelbar in Kontakt stehen.

2. Spannungswellengetriebe nach Anspruch 1, **dadurch gekennzeichnet, dass**
a. der Außenring für die Wälzkörper jeder Wälzkörperreihe jeweils eine eigene Außenführungsnut für aufweist und/oder dass
b. der Innenring für die Wälzkörper jeder Wälzkörperreihe jeweils eine eigene Innenführungsnut für aufweist.

3. Spannungswellengetriebe nach Anspruch 1 oder 2, **dadurch gekennzeichnet, dass**
a. die ersten Wälzköper und die zweiten Wälzköper mit einem gemeinsamen Wälzkörperkäfig, insbesondere Kugelkäfig, in unmittelbarem Kontakt stehen und/oder dass
b. die ersten Wälzköper räumlich separat und unabhängig von den zweiten Wälzkörpern ausgebildet und angeordnet sind, und/oder dass
c. die ersten Wälzköper unabhängig von den zweiten Wälzkörpern rotierbar sind, und/oder dass
d. keiner der ersten Wälzkörper drehfest mit einem der zweiten Wälzkörper verbunden ist.

4. Spannungswellengetriebe nach einem der Ansprüche 1 bis 3, **dadurch gekennzeichnet, dass**
a. sich das erste Hohlrad über die radialflexible, außenverzahnten Hülse und die ersten Wälzkörper der ersten Wälzkörperreihe des Wälzlagers an dem Wellengenerator abstützt und/oder dass
b. sich das zweite Hohlrad über die radialflexible, außenverzahnten Hülse und die zweiten Wälzkörper einer zweiten Wälzkörperreihe des Wälzlagers an dem Wellengenerator abstützt, und/oder dass
c. sich der axiale Teilbereich der Hülse, der mit dem ersten Hohlrad in Zahneingriff steht, über die ersten Wälzkörper der ersten Wälzkörperreihe des Wälzlagers an dem Wellengenerator abstützt und/oder dass
d. sich der axiale Teilbereich der Hülse, der mit dem zweiten Hohlrad in Zahneingriff steht, über die zweiten Wälzkörper der zweiten Wälzkörperreihe des Wälzlagers an dem Wellengenerator abstützt.

5. Spannungswellengetriebe nach einem der Ansprüche 1 bis 4, **dadurch gekennzeichnet, dass** die ersten Wälzkörper der ersten Wälzkörperreihe des Wälzlagers in einer zur Axialrichtung senkrechten ersten Querschnittsebene angeordnet sind, in der auch das erste Hohlrad angeordnet ist, und/oder dass die zweiten Wälzkörper der zweiten Wälzkörperreihe des Wälzlagers in einer zur Axialrichtung senkrechten zweiten Querschnittsebene angeordnet sind, in der auch das zweite Hohlrad angeordnet ist.

6. Spannungswellengetriebe nach einem der Ansprüche 1 bis 5, **dadurch gekennzeichnet, dass** das erste Hohlrad und das zweite Hohlrad parallel zueinander und/oder koaxial zueinander angeordnet sind.

7. Spannungswellengetriebe nach einem der Ansprüche 1 bis 6, **dadurch gekennzeichnet, dass**
a. die Verzahnung des ersten Hohlrades eine erste Zähneanzahl aufweist, die größer ist, als die Zähneanzahl der Verzahnung des zweiten Hohlrades und/oder dass
b. die erste Wälzkörperreihe 16 bis 25 Wälzkörper beinhaltet, und/oder dass
c. die zweite Wälzkörperreihe 16 bis 25 Wälzkörper beinhaltet, und/oder dass
d. die Anzahl der ersten Wälzkörper der ersten Wälzkörperreihe von der Anzahl der zweiten Wälzkörper einer zweiten Wälzkörperreihe verschieden ist, oder dass
e. die Anzahl der ersten Wälzkörper der ersten Wälzkörperreihe größer ist, als die Anzahl der zweiten Wälzkörper der zweiten Wälzkörperreihe, oder dass
f. die Anzahl der ersten Wälzkörper der ersten Wälzkörperreihe um genau 1 größer ist, als die Anzahl der zweiten Wälzkörper einer zweiten Wälzkörperreihe.

8. Spannungswellengetriebe nach einem der Ansprüche 1 bis 7, **dadurch gekennzeichnet, dass**
a. die Anzahl der ersten Wälzkörper der ersten Wälzkörperreihe gerade ist oder dass
b. die Anzahl der zweiten Wälzkörper der zweiten Wälzkörperreihe gerade ist, oder dass
c. die Anzahl der ersten Wälzkörper der ersten Wälzkörperreihe gerade ist, während die Anzahl der zweiten Wälzkörper der zweiten Wälzkörperreihe ungerade ist oder dass
d. die Anzahl der ersten Wälzkörper der ersten Wälzkörperreihe ungerade ist und, während die Anzahl der zweiten Wälzkörper der zweiten Wälzkörperreihe gerade ist.

9. Spannungswellengetriebe nach einem der Ansprüche 1 bis 8, **dadurch gekennzeichnet, dass** das Wälzlager wenigstens eine dritte Wälzkörperreihe mit dritten Wälzkörpern aufweist.

10. Spannungswellengetriebe nach einem der Ansprüche 1 bis 9, **dadurch gekennzeichnet, dass**
a. die ersten Wälzkörper in Tangentialrichtung versetzt zu den zweiten Wälzkörpern angeordnet sind, und/oder dass
b. die Wälzkörper benachbarter Wälzkörperreihen in Tangentialrichtung um einen Abstand z = D/A versetzt sind, wobei D der tangentiale Durchmesser eines Wälzkörpers und A die Gesamtanzahl an Wälzkörperspuren ist.

11. Spannungswellengetriebe nach einem der Ansprüche 1 bis 10, **dadurch gekennzeichnet, dass**
a. das Wälzlager den Außenring, jedoch keinen Innenring aufweist, sondern eine Außenumfangsfläche des Wellengenerators jeweils eine Innenführungsnut für die Wälzkörper jeder Wälzkörperreihe aufweist, oder dass
b. das Wälzlager den Innenring, keinen Außenring aufweist, sondern eine Innenumfangsfläche der radialflexiblen Hülse jeweils eine Außenführungsnut für die Wälzkörper jeder Wälzkörperreihe aufweist.

12. Spannungswellengetriebe nach einem der Ansprüche 1 bis 11, **dadurch gekennzeichnet, dass**
a. die axiale Breite des Wälzlagers größer ist, als die Summe der axialen Breiten des ersten und des zweiten Hohlrades, oder dass
b. die axiale Breite des Wälzlagers größer ist, als die Summe der axialen Breiten der Verzahnungen des ersten und des zweiten Hohlrades, oder dass
c. die axiale Breite des Wälzlagers größer ist, als die Summe der axialen Breiten der mit der Verzahnung der Hülse in Zahneingriff stehenden Anteile der Verzahnungen des ersten und des zweiten Hohlrades, oder dass
d. die axiale Breite des Wälzlagers größer ist, als die axiale Breite des ersten Hohlrades und/oder dass
e. die axiale Breite des Wälzlagers größer ist, als die axiale Breite des zweiten Hohlrades.

13. Aktuator, der ein Spannungswellengetriebe nach einem der Ansprüche 1 bis 12 aufweist.

14. Aktuator nach Anspruch 13, **dadurch gekennzeichnet, dass**
a. der Aktuator ein Lenkungsaktuator ist, oder dass
b. der Aktuator zum Antreiben einer Verstellwelle zum Verstellen des Expansionshubes und/oder des Verdichtungsverhältnisses eines Verbrennungsmotors ausgebildet und bestimmt ist, oder dass
c. der Aktuator als Nockenwellenversteller ausgebildet ist, oder dass
d. der Aktuator als Fahrwerksaktuator ausgebildet ist.

15. Verbrennungsmotor oder Fahrwerk oder Lenkung oder Fahrzeug, insbesondere Kraftfahrzeug, mit einem Spannungswellengetriebe nach einem der Ansprüche 1 bis 12 oder mit einem Aktuator nach Anspruch 14.
